# EUROPEAN PATENT APPLICATION

(11) **EP 3 040 118 A1**
(43) Date of publication of application: **06.07.2016**
(21) Application number: 14200396.1
(22) Date of filing: 29.12.2014
(51) Int. Cl.: B01J 13/00

(54) **Ether cross-linked chondroitin hydrogels and their use for soft tissue applications**

(71) Applicant: Galderma S.A., 6330 Cham (CH)
(72) Inventor: Karlsson, Anders, 743 40 Storvreta (SE)
(74) Representative: Awapatent AB

(57) **Abstract**

A hydrogel product is comprising chondroitin as the swellable polymer, wherein the chondroitin is cross-linked by ether bonds. The hydrogel product can be prepared by a process comprising the steps of: (a) providing chondroitin; and (b) cross-linking the chondroitin by ether bonds using a bi- or polyfunctional cross-linking agent. The hydrogel product is useful for treatment of soft tissue disorders.

## Description

### Technical field of the invention

The present invention relates to the field of hydrogels containing cross-linked polysaccharides and the use of such hydrogels in medical and/or cosmetic applications. More specifically, the present invention is concerned with hydrogels made of cross-linked chondroitin.

### Background to the invention

Water-absorbing gels, or hydrogels, are widely used in the biomedical field. They are generally prepared by chemical crosslinking of polymers to infinite networks. While many polysaccharides absorb water until they are completely dissolved, cross-linked gels of the same polysaccharides can typically absorb a certain amount of water until they are saturated, i.e. they have a finite liquid retention capacity, or swelling degree.

Chondroitin is a well-known biocompatible polymer. It is a naturally occurring polysaccharide belonging to the group of glycosaminoglycans (GAGs) together with e.g. chondroitin sulfate and hyaluronic acid. All GAGs are negatively charged heteropolysaccharide chains which have a capacity to absorb large amounts of water. Hyaluronic acid is widely used in the biomedical and cosmetic fields, for instance during viscosurgery and as a dermal filler.

Chondroitin sulfate (CS) is a highly abundant GAG found in the connective tissues of mammals where it, together with other sulfated GAGs, is bound to proteins as part proteoglycans. It has previously been shown that hydrogels containing CS successfully can be used in biomedical applications due to their resemblance to the natural extra cellular matrix (Lauder, R.M., Complement Ther Med 17: 56-62, 2009). Chondroitin sulfate is also used in the treatment of osteoarthritis, e.g. as a dietary supplement.

### Summary of the invention

It is an object of the present invention to provide a hydrogel having chondroitin as the swellable polymer.

It is a further object of the present invention to provide a chondroitin hydrogel with a limited swelling capacity.

For these and other objects that will be evident from this disclosure, the present invention provides according to a first aspect a hydrogel product comprising chondroitin as the swellable polymer, wherein the chondroitin is cross-linked by ether bonds.

The present invention involves chondroitin cross-linked by ether bonds, typically using native hydroxyl groups on the chondroitin backbone and multi-functional cross-linking agents. An advantage of the ether cross-linked hydrogel products according to the present invention is that they have a surprisingly low swelling capacity with a limited degree of chemical cross-linking, which makes them highly useful as firm hydrogel products, e.g. in injectable formulations for treatment of soft tissue disorders, including, but not limited to, corrective and aesthetic treatments.

In a preferred embodiment, the maximum swelling of the hydrogel in an aqueous solution corresponds to a chondroitin concentration of not less than 20 mg/mL, such as not less than 30 mg/mL.

In certain embodiments, the cross-linked chondroitin is in the form of gel particles having an average size in the range of 0.01-5 mm, preferably 0.1-0.8 mm. The hydrogel product may have the form of an injectable formulation.

In some embodiments, the chondroitin chains are cross-linked to each other via a linking group which is derived from a bi- or polyfunctional cross-linking agent, such as a bis- or polyepoxide, such as a diglycidyl ether. A preferred group of bi- or polyfunctional cross-linking agents are 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane. In one embodiment, the bi- or polyfunctional cross-linking agent is 1,4-butanediol diglycidyl ether (BDDE). In another embodiment, the bi- or polyfunctional cross-linking agent is divinyl sulfone.

The present invention provides according to a second aspect a process of preparing a hydrogel product comprising cross-linked chondroitin, comprising the steps of:
(a) providing chondroitin; and
(b) cross-linking the chondroitin by ether bonds using a bi- or polyfunctional cross-linking agent.

It has surprisingly been realized that the processes according to the present invention allows for the preparation of ether cross-linked hydrogel products having a surprisingly low swelling capacity with a limited degree of chemical cross-linking, which makes it possible to provide firm hydrogel products with a limited degree of chemical cross-linking.

In a preferred embodiment, step (b) further comprises providing particles of the cross-linked chondroitin, having an average size in the range of 0.01-5 mm, preferably 0.1-0.8 mm.

In some embodiments, the chondroitin chains are cross-linked to each other via a linking group which is derived from a bi- or polyfunctional cross-linking agent, such as a bis- or polyepoxide, such as a diglycidyl ether. A preferred group of bi- or polyfunctional cross-linking agents are 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane. In one embodiment, the bi- or polyfunctional cross-linking agent is 1,4-butanediol diglycidyl ether (BDDE). In another embodiment, the bi- or polyfunctional cross-linking agent is divinyl sulfone.

According to related aspect, the present invention also provides use of the hydrogel product as a medicament, such as in the treatment of soft tissue disorders. There is provided a method of treating a patient suffering from a soft tissue disorder by administering to the patient a therapeutically effective amount of the hydrogel product. There is also provided a method of providing corrective or aesthetic treatment to a patient by administering to the patient a therapeutically effective amount of the hydrogel product.

Other aspects and preferred embodiments of the present invention will be evident from the following detailed disclosure of the invention and the appended claims.

### Brief description of the drawings

Fig. 1 shows the structure of the chondroitin (CN) disaccharide repeating unit consisting of alternating non-sulfated D-glucuronic acid and N-acetyl-D-galactosamine moieties.
Fig. 2 is a general scheme illustrating the cross-linking between two hydroxyl groups on the chondroitin backbone by ether bonds, in this case using a bifunctional epoxide.

### Itemized listing of preferred embodiments

1. A hydrogel product comprising chondroitin as the swellable polymer, wherein the chondroitin is cross-linked by ether bonds.
2. A hydrogel product according to embodiment 1, wherein the maximum swelling of the hydrogel in an aqueous solution corresponds to a chondroitin concentration of not less than 20 mg/mL.
3. A hydrogel product according to embodiment 2, wherein the maximum swelling of the hydrogel in an aqueous solution corresponds to a chondroitin concentration of not less than 30 mg/mL.
4. A hydrogel product according to any one of embodiments 1-3, wherein the cross-linked chondroitin is in the form of gel particles having an average size in the range of 0.01-5 mm, preferably 0.1-0.8 mm.
5. A hydrogel product according to any one of embodiments 1-4, in the form of an injectable formulation.
6. A hydrogel product according to any one of embodiments 1-5, wherein the chondroitin chains are cross-linked to each other via a linking group which is derived from a bi- or polyfunctional cross-linking agent.
7. A hydrogel product according to embodiment 6, wherein said bi- or polyfunctional cross-linking agent is divinyl sulfone or a bis- or polyepoxide.
8. A hydrogel product according to embodiment 7, wherein said bi- or polyfunctional cross-linking agent is a diglycidyl ether.
9. A hydrogel product according to embodiment 8, wherein said bi- or polyfunctional cross-linking agent is selected from the group consisting of 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.
10. A hydrogel product according to embodiment 9, wherein said bi- or polyfunctional cross-linking agent is 1,4-butanediol diglycidyl ether (BDDE).
11. A hydrogel product according to embodiment 7, wherein said bi- or polyfunctional cross-linking agent is divinyl sulfone.
12. A process of preparing a hydrogel product comprising cross-linked chondroitin, comprising the steps of:
   (a) providing chondroitin; and
   (b) cross-linking the chondroitin by ether bonds using a bi- or polyfunctional cross-linking agent.
13. A process according to embodiment 12, wherein step (b) further comprises providing particles of the cross-linked chondroitin, having an average size in the range of 0.01-5 mm, preferably 0.1-0.8 mm.
14. A process according to any one of embodiments 12-13, wherein the bi- or polyfunctional crosslinking agent of step (b) is divinyl sulfone or a bis- or polyepoxide.
15. A process according to embodiment 14, wherein said bi- or polyfunctional cross-linking agent is a diglycidyl ether.
16. A process according to embodiment 15, wherein said bi- or polyfunctional cross-linking agent is selected from the group consisting of 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.
17. A process according to embodiment 16, wherein said bi- or polyfunctional cross-linking agent is 1,4-butanediol diglycidyl ether (BDDE).
18. A process according to embodiment 14, wherein said bi- or polyfunctional cross-linking agent is divinyl sulfone.
19. A hydrogel product obtainable by the process according to any one of embodiments 12-18.
20. A hydrogel product according to embodiment 19, which has a maximum swelling in an aqueous solution corresponding to a chondroitin concentration of not less than 20 mg/mL.
21. A hydrogel product according to embodiment 20, wherein the maximum swelling in an aqueous solution corresponds to a chondroitin concentration of not less than 30 mg/mL.
22. A hydrogel product according to any one of embodiments 1-11 or 19-21 for use as a medicament.
23. A hydrogel product according to embodiment 22 for use in the treatment of soft tissue disorders.
24. Use of a hydrogel product according to any one of embodiments 1-11 or 19-21, for the manufacture of a medicament for treatment of soft tissue disorders.
25. A method of treating a patient suffering from a soft tissue disorder by administering to the patient a therapeutically effective amount of a hydrogel product according to any one of embodiments 1-11 or 19-21.
26. A method of providing corrective or aesthetic treatment to a patient by administering to the patient a therapeutically effective amount of a hydrogel product according to any one of embodiments 1-11 or 19-21.
27. A method of cosmetically treating skin, which comprises administering to the skin a hydrogel product according to any one of embodiments 1-11 or 19-21.

### Detailed description of the invention

The present invention provides firm hydrogels made of cross-linked chondroitin, processes for providing the same and uses thereof. In the hydrogel products according to the invention, the cross-linked chondroitin is the swellable polymer which provides the gel properties.

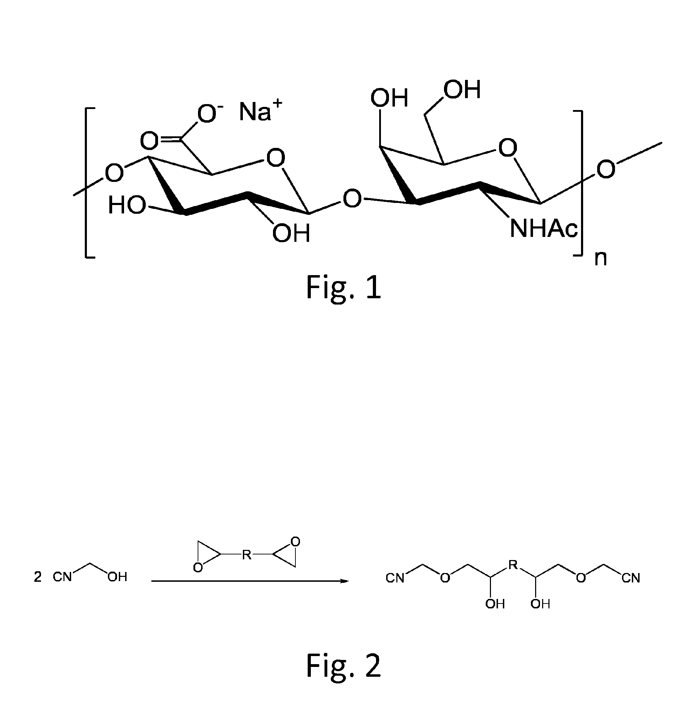

The term "chondroitin" refers to GAGs having as a disaccharide repeating unit (CN) the general structure shown in Fig. 1, consisting of alternating non-sulfated D-glucuronic acid and N-acetyl-D-galactosamine moieties. For avoidance of doubt, the term "chondroitin" does not encompass any form of chondroitin sulfate.

The chondroitin can be obtained from various sources of animal and non-animal origin. Sources of non-animal origin include yeast and preferably bacteria. The molecular weight of a single chondroitin molecule is typically in the range of 1-500 kDa, but other molecular weights are possible.

Non-sulfated chondroitin closely resembles hyauronan (hyaluronic acid), the only glycosaminoglycan that is non-sulfated in its native form, which is an epimer of chondroitin differing only in the position of the hydroxyl group on the C4 carbon on the galactosamine unit of chondroitin. As the two polysaccharides have nearly identical chemical structures and have the same charge, it would be expected that hydrogels prepared by covalent crosslinking of either one would have similar physiochemical properties (e.g. swelling capacity and viscoelasticity).

Unexpectedly, preliminary observations have shown that the ether cross-linked chondroitin hydrogels according to the invention appear to have significantly lower swelling capacity than the hyaluronan-based hydrogels prepared using the identical synthetic conditions. In preferred embodiments, the concentration of the cross-linked chondroitin is not below 20 mg/ml, such as 20-100 mg/ml or 20-50 mg/ml. In some embodiments the concentration of the cross-linked chondroitin is not below 30 mg/ml, such as 30-100 mg/ml or 30-50 mg/ml. A lower swelling capacity is generally associated with higher density and increased mechanical strength and it is concluded this observation is responsible for providing such hydrogels with an increased stability and duration *in vivo.*

Crosslinked chondroitin comprises cross-links between the chondroitin chains, which creates a continuous network of chondroitin molecules which is held together by the covalent cross-links, physical entangling of the chondroitin chains and various interactions, such as electrostatic interactions, hydrogen bonding and van der Waals forces.

The cross-linked chondroitin product is preferably biocompatible. This implies that no, or only very mild, immune response occurs in the treated individual. That is, no or only very mild undesirable local or systemic effects occur in the treated individual.

The cross-linked chondroitin product according to the invention may be a gel, or a hydrogel. That is, it can be regarded as a water-insoluble, but substantially dilute crosslinked system of chondroitin molecules when subjected to a liquid, typically an aqueous liquid.

The gel contains mostly liquid by weight and can e.g. contain 90-98%, water, but it behaves like a solid due to a three-dimensional cross-linked chondroitin network within the liquid. Due to its significant liquid content, the gel is structurally flexible and similar to natural tissue, which makes it very useful as a scaffold in tissue engineering and for tissue augmentation. It is also useful for treatment of soft tissue disorder and for corrective or aesthetic treatment. It is preferably used as an injectable formulation.

Cross-linking of the chondroitin may be achieved by modification with a cross-linking agent. The chondroitin concentration and the extent of cross-linking affect the mechanical properties, e.g. the elastic modulus G', and stability properties, of the gel. Cross-linked chondroitin gels can be characterized in terms of "degree of modification". The degree of modification of chondroitin gels generally range between 0.1 and 15 mole%. The degree of modification (mole%) describes the amount of cross-linking agent(s) that is bound to chondroitin, i.e. molar amount of bound cross-linking agent(s) relative to the total molar amount of repeating CN disaccharide units. The degree of modification reflects to what degree the chondroitin has been chemically modified by the cross-linking agent. Reaction conditions for ether cross-linking and suitable analytical techniques for determining the degree of modification are all well known to the person skilled in the art, who easily can adjust these and other relevant factors and thereby provide suitable conditions to obtain a desirable degree of modification and verify the resulting product characteristics with respect to the degree of modification. A BDDE (1,4-butandiol diglycidylether) cross-linked chondroitin gel may for example be prepared according to the method described for hyaluronic acid in Examples 1 and 2 of published international patent application WO 9704012.

Chondroitin gels may also comprise a portion of chondroitin which is not cross-linked, i.e not bound to the three-dimensional cross-linked chondroitin network. However, it is preferred that at least 50 % by weight, preferably at least 60 % by weight, more preferably at least 70 % by weight, and most preferably at least 80 % by weight, of the chondroitin in a gel composition form part of the cross-linked chondroitin network.

The cross-linked chondroitin is preferably present in the form of gel particles. The gel particles preferably have an average size in the range of 0.01-5 mm, preferably 0.1-0.8 mm, such as 0.2-0.5 mm or 0.5-0.8 mm.

The hydrogel product may be present in an aqueous solution, but it may also be present in dried or precipitated form, e.g. in ethanol. The hydrogel product is preferably injectable.

Since the nature of the product obtainable by the processes according to the invention is complex, the product may also be defined as being the result of these processes.

The hydrogel product may prepared by a process comprising the steps of:
(a) providing chondroitin; and
(b) cross-linking the chondroitin by ether bonds using a bi- or polyfunctional cross-linking agent.

The chondroitin chains are cross-linked to each other via a linking group which is derived from a bi- or polyfunctional cross-linking agent. The bi-or polyfunctional crosslinking agent connects the chondroitin chains to each other via hydroxyl groups on the chondroitin backbone. The bi- or polyfunctional crosslinking agent further acts as a spacer between the chondroitin chains in the cross-linked product.

The bi- or polyfunctional crosslinking agent comprises two or more functional groups capable of reacting with functional hydroxyl groups of the chondroitin, resulting in the formation of covalent bonds. The bi- or polyfunctional crosslinking agent may for example be selected from the group consisting of divinyl sulfone, multiepoxides and diepoxides.

A preferred type of bi- or polyfunctional cross-linking agent is a bis- or polyepoxide, such as a diglycidyl ether. It is preferred to perform the cross-linking under alkaline conditions, such as at a pH above 9, e.g. in the range of 9-12. According to an embodiment, the bi- or polyfunctional crosslinking agent comprises two or more glycidyl ether functional groups. The glycidyl ether functional groups react with primary hydroxyl groups of the chondroitin, resulting in the formation of ether bonds. It follows that when a diglycidyl ether cross-linking agent reacts with the primary hydroxyl groups of hyaluronan, two ether bonds are formed with an intermediate spacer remaining from the cross-linking agent,

Preferred bi- or polyfunctional cross-linking agent for cross-linking the chondroitin chains include 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane. A particularly preferred bi- or polyfunctional cross-linking agent is BDDE.

Another preferred bi- or polyfunctional cross-linking agent is divinyl sulfone.

The process for generating the crosslinked hydrogel typically involves preparing a mixture of chondroitin (having a molecular weight of 1 - 500 kDa with preference to 5 - 100 kDa or even more preferred 10 - 50 kDa, at a concentration of 10 - 500 mg/mL with preference to 50 - 250 mg/mL or even more preferred 100 - 200 mg/mL) together with a cross-linking agent, such as divinyl sulfone or a multifunctional epoxide, with preference to diepoxides or specifically 1,4-butanediol diglycidyl ether (in a ratio of 0.01 - 100 molar equivalents to disaccharide units, with preference to 0.1 - 10 equivalents) in an alkaline solution, preferably an aqueous solution of sodium hydroxide (0.1-10 wt%, or preferably 0.5-1 wt%). Incubating the mixture for 1-48 hours at a temperature in the range of 0-80 °C, with preference to 10-70 °C or even better at 20-60 °C, yields a hydrogel that when subjected to an excess aqueous solution, such as 0.9 % sodium chloride, typically does not attain a polysaccharide concentration that is lower than 20 mg/mL. The hydrogel is preferably micronized to hydrogel particles in the size of 0.01 - 5 mm that subsequently are washed in excess aqueous solution such as phosphate buffered saline, sodium chloride or deionized water.

A typical application of the resulting macromolecular structures involves the preparation of injectable formulations for treatment of soft tissue disorders, including, but not limited to, corrective and aesthetic treatments.

Without desiring to be limited thereto, the present invention will in the following be illustrated by way of examples.

### Examples

### Example 1 - Preparation of an ether cross-linked chondroitin hydrogel

Mixtures of chondroitin having the following molecular weight ranges are prepared: (A) 1-10 kDa; (B) 10-50 kDa; (C) 50-100 kDa; (D) 100-500 kDa. The mixtures are prepared at different chondroitin concentrations: 10, 50, 100, 200, and 500 mg/mL.

These mixtures are individually mixed with the following cross-linking agents: divinyl sulfone, 1,4-butanediol diglycidyl ether (BDDE), 1,2-bis(2,3-epoxypropoxy)ethylene (EGDGE) ethylene glycol diglycidyl ether (EGDE), 1,2-ethanediol diglycidyl ether (EDDE) and diepoxyoctane. The tested cross-linking agent concentrations are 0.01, 0.1, 1, 10 and 100 molar equivalents to disaccharide units of the chondroitin.

The resulting mixtures of chondroitin and cross-linking agent are allowed to react in an aqueous alkaline solutions of sodium hydroxide having the following concentrations: 0.1, 0.5, 1 and 10 wt%. The mixtures are incubated for 48 hours at the following temperatures: 10°C, 20°C, 40°C, 60°C and 80°C. Reaction samples are collected after 1, 6, 12, 18, 24, 36 and 48 h.

The resulting products are washed and collected.

### Example 2 - Preparation of an ether cross-linked chondroitin hydrogel

Cross-linked chondroitin hydrogels are prepared according to Example 1. As reference samples, ether cross-linked hyaluronic acid hydrogels are prepared using the same conditions.

The chondroitin and hyaluronic acid hydrogels are subjected to swelling in an excess aqueous solution, such as 0.9 % sodium chloride, and the resulting maximum polysaccharide concentration is measured.

The resulting chondroitin hydrogels appear to have significantly lower swelling capacity than the hyaluronan-based hydrogels prepared using identical synthetic conditions (including molecular weight of the polysaccharides). When subjected to an excess of an aqueous solution, the chondroitin hydrogels will typically not absorb the solution to a greater extent than what corresponds to a polysaccharide concentration below 20 mg/mL.

## Claims

1. A hydrogel product comprising chondroitin as the swellable polymer, wherein the chondroitin is cross-linked by ether bonds.

2. A hydrogel product according to claim 1, wherein the maximum swelling of the hydrogel in an aqueous solution corresponds to a chondroitin concentration of not less than 20 mg/mL, preferably not less than 30 mg/mL.

3. A hydrogel product according to any one of claims 1-2, wherein the chondroitin chains are cross-linked to each other via a linking group which is derived from a bi- or polyfunctional cross-linking agent.

4. A hydrogel product according to claim 3, wherein said bi- or polyfunctional cross-linking agent is selected from the group consisting of divinyl sulfone, 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.

5. A hydrogel product according to claim 4, wherein said bi- or polyfunctional cross-linking agent is 1,4-butanediol diglycidyl ether (BDDE).

6. A hydrogel product according to any one of claims 1-5, wherein the cross-linked chondroitin is in the form of gel particles having an average size in the range of 0.01-5 mm, preferably 0.1-0.8 mm.

7. A process of preparing a hydrogel product comprising cross-linked chondroitin, comprising the steps of:
(a) providing chondroitin; and
(b) cross-linking the chondroitin by ether bonds using a bi- or polyfunctional cross-linking agent.

8. A process according to claim 7, wherein said bi- or polyfunctional cross-linking agent is selected from the group consisting of divinyl sulfone, 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.

9. A process according to claim 8, wherein said bi- or polyfunctional cross-linking agent is 1,4-butanediol diglycidyl ether (BDDE).

10. A process according to any one of claims 7-9, wherein step (b) further comprises providing particles of the cross-linked chondroitin, having an average size in the range of 0.01-5 mm, preferably 0.1-0.8 mm.

11. A hydrogel product obtainable by the process according to any one of claims 7-10.

12. Product according to claim 11, which is a hydrogel having a maximum swelling in an aqueous solution corresponding to a chondroitin concentration of not less than 20 mg/mL, preferably not less than 30 mg/mL.

13. A hydrogel product according to any one of claims 1-6 and 11-12 for use as a medicament.

14. A hydrogel product according to claim 13 for use in the treatment of soft tissue disorders.

15. A method of providing corrective or aesthetic treatment to a patient by administering to the patient a therapeutically effective amount of a hydrogel product according to any one of claims 1-6 and 11-12.
